# EUROPÄISCHE PATENTSCHRIFT

(11) **EP 0 582 890 B1**
(45) Veröffentlichungstag und Bekanntmachung des Hinweises auf die Patenterteilung: **18.09.1996**
(21) Anmeldenummer: 93112001.8
(22) Anmeldetag: 27.07.1993
(51) Int. Cl.: H02J 9/06

(54) **Schaltungsanordnung**
Circuit arrangement
Arrangement de circuit

(30) Priorität: 10.08.1992 DE 4226458
(43) Veröffentlichungstag der Anmeldung: 16.02.1994
(73) Patentinhaber: SIEMENS AKTIENGESELLSCHAFT, 80333 München (DE)
(72) Erfinder: Lang, Bernhard, Dipl.-Ing., D-76228 Karlsruhe (DE)

(56) Entgegenhaltungen:
- DE-A- 3 444 655
- DE-A- 3 908 324
- DE-A- 4 121 007
- US-A- 4 318 007
- US-A- 4 763 014

## Beschreibung

Die Erfindung betrifft eine Schaltungsanordnung mit mindestens drei Eingangsklemmen, von denen die erste an einem Bezugspotential liegt und die zweite und dritte mit identischen Gleichspannungen beaufschlagbar sind, die über Gleichrichterelemente an einen gemeinsamen Verbindungspunkt weitergeleitet werden, mit mindestens zwei Ausgangsklemmen, von denen die erste an dem Bezugspotential liegt und die zweite mit dem gemeinsamen Verbindungspunkt verbunden ist.

Automatisierungssysteme werden häufig mit einer Gleichspannung versorgt, welche einer zentralen Akkumulatoranlage entnommen wird. Diese wird gewöhnlich aus dem Versorgungsnetz nachgeladen, wobei bei Netzausfall das Laden mit einem Dieselaggregat erfolgt.
Aus der Siemens-Betriebsanleitung TELEPERM M - Automatisierungssystem AS 235 H, Ausgabe 1990, ist ein hochverfügbares Automatisierungssystem bekannt, das aus Zwei voneinander unabhängigen 24 Volt-Gleichspannungsquellen versorgt wird. Diese Versorgungsspannungen sind durch zwei Dioden voneinander entkoppelt und einem gemeinsamen Verbindungspunkt zugeführt. Fällt z. B. eine Versorgungsspannung durch Kurzschluß aus, so sperrt die entsprechende Diode und die Einspeisung erfolgt über die andere Diode. Für den Fall, daß eine Diode einen Kurzschluß aufweist, schaltet eine dieser Diode vorgeschaltete Schmelzsicherung die entsprechende Versorgungsspannung ab. Eine redundante Einspeisung der Versorgungsspannungen ist wegen der durchgeschmolzenen Sicherung nach der Beseitigung des Kurzschlusses nicht möglich. Die volle Funktionsfähigkeit der beiden Dioden ist also eine wichtige Voraussetzung für die redundante Einspeisung dieser Versorgungsspannungen.

Der vorliegenden Erfindung liegt die Aufgabe zugrunde, eine Schaltungsanordnung der eingangs genannten Art zu schaffen, welche eine Überwachung der Dioden während des Betriebs ermöglicht.

Diese Aufgabe wird dadurch gelöst, daß die Gleichrichterelemente mit einer Wechselspannung der Frequenz f zur Überwachung der Gleichrichterelemente beaufschlagt werden, daß die Ausgangsspannung dieser Gleichrichterelemente am gemeinsamen Verbindungspunkt einer Signalauswerteschaltung zugeführt wird, welche den Wechselspannungsanteil dieser Spannung filtert, gleichrichtet und mit einer Referenzspannung vergleicht.

Weitere vorteilhafte Ausgestaltungen der Erfindung ergeben sich aus den Unteransprüchen.

Die Schaltungsanordnung wird insbesondere in Automatisierungssystemen verwendet.

Anhand der Zeichnung werden die erfindungsgemäße Schaltungsanordnung, deren Ausgestaltungen sowie Vorteile näher erläutert.

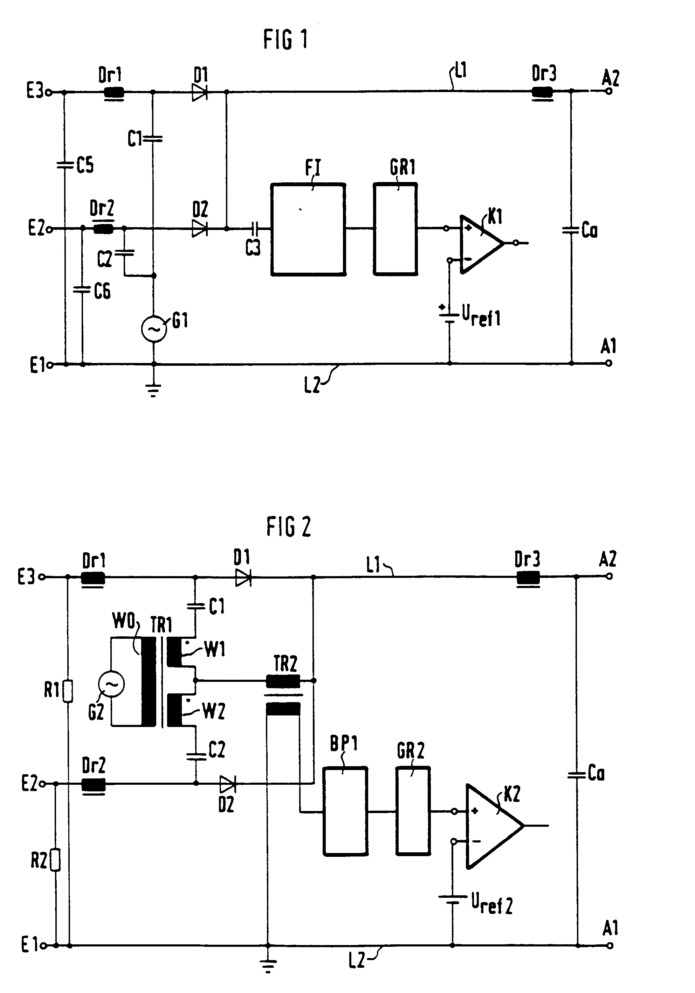

Die Figuren 1, 2 und 3 zeigen drei Ausführungsbeispiele der erfindungsgemäßen Schaltungsanordnung, wobei gleiche Teile in den Figuren mit gleichen Bezugszeichen versehen sind.

In Figur 1 sind mit E1, E2, E3 Eingangsklemmen und mit A1, A2 Ausgangsklemmen bezeichnet. Den Eingangsklemmen E2, E3 ist jeweils eine 24 Volt-Gleichspannung zuführbar, die durch Gleichrichterelemente in Form von Dioden D1, D2 entkoppelt werden. Die Kathoden der Dioden D1, D2 sind an einem gemeinsamen Verbindungspunkt kurzgeschlossen und über eine Leitung L1 mit der Ausgangsklemme A2 der Schaltungsanordnung verbunden. Die Klemmen E1, A1 liegen an einem gemeinsamen Bezugspotential, wobei an Ausgangsklemmen A1, A2 z. B. ein Schaltnetzteil angeschlossen und die Eingangsklemme E1 über einen Wechselspannungsgenerator G1 und Kondensatoren C1, C2 mit den Anoden der Dioden D1, D2 verbunden ist. Die durch den Wechselspannungsgenerator G1 erzeugte Wechselspannung der Frequenz f wird den Anoden der Dioden D1, D2 eingespeist, wodurch am gemeinsamen Verbindungspunkt dieser Dioden ein Summensignal der Halbwellen der Dioden D1, D2 erzeugt wird. Ein Kondensator C3 führt den Wechselspannungsanteil dieses Signals einer Signalauswerteschaltung zu, die aus einem oberwellenselektiven Filter FI, einem Gleichrichter GR1 und einem Komparator K1 besteht. Das Filter FI ist derart ausgebildet, daß es eine der ungeradzahligen Oberschwingungen, z. B. die dritte Oberschwingung, aus dem Signal ausfiltert, die der Gleichrichter GR1 gleichrichtet und dem nichtinvertierenden Eingang des Komparators K1 aufschaltet. Am invertierenden Eingang des Komparators K1 liegt eine Referenzspannung U_{ref1}, die im störungsfreien Betrieb, d. h., die Dioden D1, D2 sind voll funktionsfähig, kleiner ist als das gleichgerichtete Signal am nichtinvertierenden Eingang. Die Ausgangsspannung des Komparators K1 entspricht im störungsfreien Betrieb einer logischen "1", die einer hier nicht dargestellten Meldevorrichtung den störungsfreien Betrieb anzeigt. Fällt eine der Dioden D1, D2 durch Unterbrechung aus, so halbiert sich nahezu das Signal am nichtinvertierenden Eingang des Komparators K1 und dessen Ausgangsspannung entspricht nun einer logischen "0", was auf einen gestörten Betrieb hinweist. Eine einer logischen "0" entsprechende Ausgangsspannung stellt sich am Ausgang des Komparators K1 auch dann ein, wenn beide Dioden D1, D2 durch Unterbrechung ausfallen, da in diesem Fall am nichtinvertierenden Eingang keine Spannung anliegt. Fällt eine der beiden Dioden D1, D2 oder fallen beide Dioden durch Kurzschluß aus, so ist die gefilterte gleichgerichtete Spannung am Eingang des nichtinvertierenden Eingangs durch das Ausfiltern einer der ungeradzahligen Oberschwingungen kleiner als die Referenzspannung am invertierenden Eingang, wodurch ebenfalls ein gestörter Betrieb durch die einer logischen "0" entsprechende Ausgangsspannung des Komparators K1 angezeigt wird. Damit die von dem Wechselstromgenerator G1 erzeugte Wechselspannung nicht über die Eingangsklemmen E1, E2 und E1, E3 an weitere ebenfalls an die Gleichspannungsquellen angeschlossene Schaltungen gelangt, sind die beiden Gleichspannungen an diesen Klemmen über jeweils einen aus einem Kondensator C5, C6 und einer Drossel Dr1, Dr2 gebildeten Tiefpaßfilter an die Dioden D1, D2 gelegt. Entsprechend verhindert ein aus einem Kondensator Ca und einer Drossel Dr3 gebildeter Tiefpaß die Ausbreitung der gleichgerichteten Wechselspannung des Generators G1 an einen an die Ausgangsklemmen A1, A2 angeschlossenen Verbraucher.
Die Induktivitäten der Drosseln Dr1, Dr2, Dr3 werden deshalb so gewählt, daß bei einer Einspeisefrequenz f zum einen die jeweilige Impedanz der Drosseln Dr1, Dr2 sehr viel größer ist als die jeweilige Impedanz der an den Klemmen E1, E3 und E1, E2 anliegenden Spannungsquellen und zum anderen die Impedanz der Drossel Dr3 sehr viel größer ist als die Impedanz des an die Ausgangsklemmen angeschlossenen Verbrauchers.

Im Unterschied zu Figur 1 wird nach Figur 2 in die Anoden der Dioden D1, D2 eine Wechselspannung über einen Transformator TR1 mit Wicklungen WO, W1, W2 eingespeist. Die Wicklungen W2, W3 sind gleichartig ausgebildet, aber unterschiedlich gepolt, wodurch über den Diodenkreis C1, D1 eine positive Halbwelle und über den Diodenkreis C2, D2 eine negative Halbwelle geführt wird und am gemeinsamen Verbindungspunkt eine Wechselspannung der Frequenz 2 f auftritt, wobei f wiederum die Frequenz der vom Wechselspannungsgenerator G2 erzeugten und in die Wicklung WO eingespeisten Wechselspannung ist. Zur Symmetrierung der Halbwellen sind zwei Widerstände R1, R2 vorgesehen, von denen der Widerstand R1 zwischen die Eingangsklemmen E1, E3 und der Widerstand R2 zwischen die Eingangsklemmen E1, E2 geschaltet ist. Die Wechselspannung mit der Frequenz 2 f wird über einen weiteren Transformator TR2 einem Bandpaß BP1 zugeführt, der derart ausgebildet ist, daß er Wechselspannungen der Frequenz 2 f überträgt. Dies ist im störungsfreien Betrieb der Fall. Die Ausgangsspannung des Bandpasses BP1 wird mit einem Gleichrichter GR2 gleichgerichtet und dem nichtinvertierenden Eingang eines Komparators K2 zugeführt. Die Amplitude einer Referenzspannung U_{ref2} am invertierenden Eingang des Komparators K2 ist wieder derart bemessen, daß diese im störungsfreien Betrieb kleiner als die Ausgangsspannung des Gleichrichters GR2 am nichtinvertierenden Eingang des Komparators K2 ist. Solange beide Dioden D1, D2 im Hinblick auf ihr Durchlaß- und Sperrverhalten fehlerfrei arbeiten, entspricht die Ausgangsspannung des Komparators K2 einer logischen "1". Fallen beide Dioden D1, D2 durch Kurzschluß oder Unterbrechung aus, so liegt keine Wechselspannung am Eingang des Bandpasses BP1 an, und die Amplitude der Ausgangsspannung des Bandpasses BP1 ist Null. Die Amplitude der am nichtinvertierenden Eingang des Komparators K2 anliegenden Spannung ist ebenfalls Null, und die Ausgangsspannung des Komparators K2 entspricht einer logischen "0", was auf einen Ausfall der beiden Dioden hinweist. Für den Fall, daß nur eine Diode kurzgeschlossen oder unterbrochen ist, liegt am Eingang des Bandpasses BP1 eine Wechselspannung der Frequenz f, wodurch die Amplitude der Ausgangsspannung des Bandpasses BP1 ebenfalls Null ist und der Komparator K2 ebenfalls mit einer einer logischen "0" entsprechenden Ausgangsspannung auf den Ausfall einer der beiden Dioden hinweist.

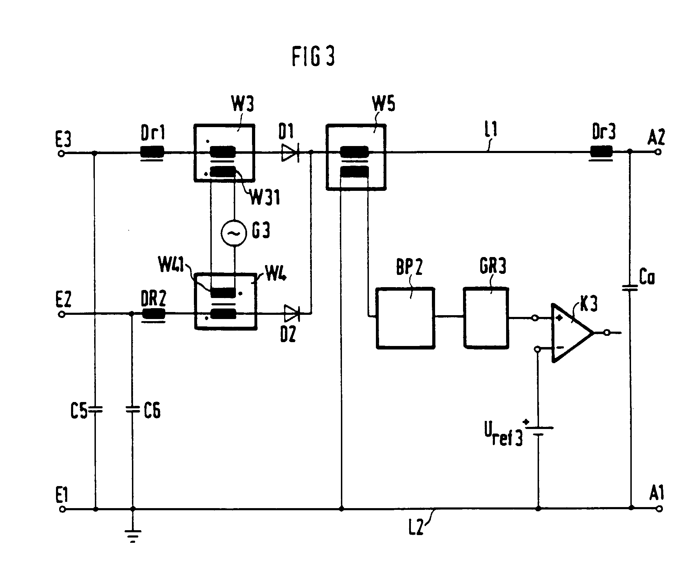

Ein weiteres Ausführungsbeispiel der Erfindung zeigt Figur 3. Dort werden wiederum die beiden Gleichspannungen an den Eingangsklemmen über jeweils den aus dem Kondensator C5, C6 und der Drossel Dr1, Dr2 gebildeten Filter an die Dioden D1, D2 gelegt, um zu verhindern, daß die von einem Wechselspannungsgenerator G3 erzeugte Wechselspannung über die Eingangsklemmen E1, E2 an weitere ebenfalls an die Gleichspannungsquellen angeschlossene Schaltungen gelangt. Die Einspeisung der Wechselspannung in die Anoden der Dioden D1, D2 wird in diesem Beispiel durch Stromwandler W3, W4 bewirkt, deren Primärwicklungen W31, W41 derart in Serie geschaltet sind, daß die Einspeisung in den Diodenkreis von D1 gegenphasig zu dem Diodenkreis von D2 erfolgt. Das am Verbindungspunkt der Dioden D1, D2 entstehende Signal mit der doppelten Einspeisefrequenz wird über einen Stromwandler W5, über einen Bandpaß BP2, einen Gleichrichter GR3 einem Komparator K3 zugeführt. Der Bandpaß BP2 ist für die doppelte Einspeisefrequenz ausgelegt, und für den Fall, daß mindestens eine der beiden Dioden D1, D2 durch Kurzschluß oder Unterbrechung ausfällt, vermindert sich die Amplitude der Gleichspannung am nichtinvertierenden Eingang auf einen Wert Null und bewirkt zusammen mit einer Referenzspannung U_{ref4} am invertierenden Eingang ein Signal logisch "0" am Ausgang des Komparators K6, wodurch ein Diodenfehler angezeigt wird.

## Patentansprüche

1. Schaltungsanordnung
- mit mindestens drei Eingangsklemmen (E1, E2, E3), von denen die erste (E1) an einem Bezugspotential liegt und die zweite und dritte (E2, E3) mit identischen Gleichspannungen beaufschlagbar sind, die über Gleichrichterelemente (D1, D2) an einen gemeinsamen Verbindungspunkt weitergeleitet werden,
- mit mindestens zwei Ausgangsklemmen (A1, A2), von denen die erste (A1) an dem Bezugspotential liegt und die zweite (A2) mit dem gemeinsamen Verbindungspunkt verbunden ist,
**dadurch gekennzeichnet,**
- daß die Gleichrichterelemente (D1, D2) mit einer Wechselspannung der Frequenz f zur Überwachung der Gleichrichterelemente beaufschlagt werden,
- daß die Ausgangsspannung dieser Gleichrichterelemente (D1, D2) am gemeinsamen Verbindungspunkt einer Signalauswerteschaltung (FI, GR1, K1; BP1, GR2, K2; BP2, GR3, K3) zugeführt wird, welche den Wechselspannungsanteil dieser Spannung filtert, gleichrichtet und mit einer Referenzspannung (U_{ref1}, U_{ref2}, U_{ref3}) vergleicht.

2. Schaltungsanordnung nach Anspruch 1, **dadurch gekennzeichnet,**
- daß die Signalauswerteschaltung (FI, GR1, K1; BP1, GR2, K2; BP2, GR3, K3) einen Filter (FI) aufweist, der eine Oberschwingung des Wechselspannungsanteils ausfiltert.

3. Schaltungsanordnung nach Anspruch 1, **dadurch gekennzeichnet,**
- daß die Wechselspannung über einen Transformator (TR1, W0, W1, W2; W3, W4) den Gleichrichterelementen (D1, D2) zugeführt wird, derart, daß am Verbindungspunkt eine Wechselspannung mit der doppelten Einspeisefrequenz f anliegt, die über einen weiteren Transformator (TR2, W5) einem Bandpaß (BP1; BP2) aufgeschaltet wird, der Wechselspannungen der doppelten Einspeisefrequenz f überträgt.

4. Schaltungsanordnung nach Anspruch 2 oder 3, **dadurch gekennzeichnet,**
- daß die Signalauswerteschaltung einen Komparator (K1, K2, K3) aufweist, an dessen ersten Eingang das gleichgerichtete Signal und an dessen zweiten Eingang die Referenzspannung (U_{ref1}, ...) anliegt.

5. Schaltungsanordnung nach einem der Ansprüche 1 bis 4, **dadurch gekennzeichnet,**
- daß den Gleichrichterelementen (D1, D2) Filter (C5, Dr1; C6, Dr2) vorgeschaltet sind.

6. Schaltungsanordnung nach Anspruch 5, **dadurch gekennzeichnet,**
- daß die Filter jeweils eine Drossel (Dr1, Dr2) aufweisen, deren Induktivität so gewählt ist, daß ihre Impedanz bei der Einspeisefrequenz f größer ist als die Impedanz der jeweiligen die Gleichspannungen erzeugenden Spannungsquellen.

7. Schaltungsanordnung nach einem der Ansprüche 1 bis 6, **dadurch gekennzeichnet,**
- daß an den Ausgangsklemmen (A1, A2) ein aus einem Kondensator (Ca) und einer Drossel (Dr3) gebildeter Tiefpaßfilter angeordnet ist, wobei die Induktivität der Drossel (Dr3) so gewählt ist, daß deren Impedanz bei der Einspeisefrequenz f größer ist als die Impedanz eines an die Ausgangsklemmen (A1, A2) angeschlossenen Verbrauchers.

8. Automatisierungssystem, das aus mindestens zwei unabhängigen Gleichspannungsquellen versorgt wird, mit einer Schaltungsanordnung nach einem der Ansprüche 1 bis 7.

## Claims

1. Circuit arrangement
- having at least three input terminals (E1, E2, E3), the first (E1) of which is applied to a reference potential and the second and third (E2, E3) can be loaded with identical direct voltages, which are relayed by way of rectifier elements (D1, D2) to a common connection point,
- having at least two output terminals (A1, A2), the first (A1) of which is applied to the reference potential and the second (A2) is connected to the common connection point,
characterized in that
- the rectifier elements (D1, D2) are loaded with an alternating voltage of the frequency f to monitor the rectifier elements,
- the output voltage of these rectifier elements (D1, D2) at the common connection point is supplied to a signal-evaluation circuit (FI, GR1, K1; BP1, GR2, K2; BP2, GR3, K3), which filters the alternating-voltage component of this voltage, rectifies it and compares it with a reference voltage (U_{ref1}, U_{ref2}, U_{ref3}).

2. Circuit arrangement according to claim 1,
characterized in that
- the signal-evaluation circuit (FI, GR1, K1; BP1, GR2, K2; BP2, GR3, K3) has a filter (FI) which filters out a harmonic oscillation of the alternating-voltage component.

3. Circuit arrangement according to claim 1,
characterized in that
- the alternating voltage is supplied by way of a transformer (TR1, W0, W1, W2; W3, W4) to the rectifier elements (D1, D2) in such a way that at the connection point an alternating voltage with double the supply frequency f is applied, which is applied by way of a further transformer (TR2, W5) to a band-pass filter (BP1; BP2) which transmits alternating voltages of double the supply frequency f.

4. Circuit arrangement according to claim 2 or 3, characterized in that
- the signal-evaluation circuit has a comparator (K1, K2, K3), to the first input of which the rectified signal is applied and to the second input of which the reference voltage (U_{ref1,} ...) is applied.

5. Circuit arrangement according to one of claims 1 to 4, characterized in that
- filters (C5, Dr1; C6, Dr2) are connected in series with the rectifier elements (D1, D2).

6. Circuit arrangement according to claim 5, characterized in that
- the filters each have a reactor (Dr1, Dr2), the inductance of which is selected in such a way that its impedance at the supply frequency f is greater than the impedance of the respective voltage sources generating the direct voltages.

7. Circuit arrangement according to one of claims 1 to 6, characterized in that
- at the output terminals (A1, A2) there is arranged a low-pass filter formed from a capacitor (Ca) and a reactor (Dr3), whereby the inductance of the reactor (Dr3) is selected in such a way that its impedance at the supply frequency f is greater than the impedance of a consumer connected to the output terminals (A1, A2).

8. Automation system which is supplied from at least two independent direct-voltage sources, having a circuit arrangement according to one of claims 1 to 7.

## Revendications

1. Montage comportant
- au moins trois bornes (E1, E2, E3) d'entrée, dont la première (E1) est à un potentiel de référence et dont les seconde et troisième (E2, E3) peuvent être chargées par des tensions continues identiques, qui sont retransmises par l'intermédiaire d'éléments (D1, D2) redresseurs à un point commun de liaison,
- au moins deux bornes (A1, A2) de sortie, dont la première (A1) est au premier potentiel de référence et dont la seconde (A2) est reliée au point commun de liaison,
caractérisé en ce que
- les éléments (D1, D2) redresseurs sont chargés par une tension alternative de fréquence (f) pour le contrôle des éléments redresseurs,
- la tension de sortie de ces éléments (D1, D2) redresseurs au point commun de liaison est envoyée à un circuit (FI, GR1, K1 ; BP1, GR2, K2 ; BP2, GR3, K3) d'exploitation de signal, qui filtre la composante de tension alternative de cette tension, la redresse et la compare à une tension (U_{ref1}, U_{ref2}, U_{ref3}) de référence.

2. Montage suivant la revendication 1,
caractérisé en ce que
- le circuit (FI, GR1, K1 ; BP1, GR2, K2 ; BP2, GR3, K3) d'exploitation de signal comporte en filtre (FI), qui extrait par filtrage un harmonique de la composante de tension alternative.

3. Montage suivant la revendication 1,
caractérisé en ce que
- la tension alternative est envoyée aux éléments (D1, D2) redresseurs par l'intermédiaire d'un transformateur (TR1, W0, W1, W2 ; W3, W4) de telle sorte qu'il y ait au point de liaison une tension alternative de fréquence d'alimentation f double, qui est appliquée par l'intermédiaire d'un autre transformateur (TR2, W5) à un passe-bande (BP1 ; BP2) qui transmet des tensions alternatives de fréquence f d'alimentation double.

4. Montage suivant la revendication 2 ou 3,
caractérisé en ce que
- le circuit d'exploitation de signal comporte un comparateur (K1, K2, K3), à la première entrée duquel est appliqué le signal redressé et à la seconde entrée duquel est appliquée la tension (U_{ref1},...) de référence.

5. Montage suivant l'une des revendications 1 à 4,
caractérisé en ce que
- il est branché en amont des éléments (D1, D2) redresseurs des filtres (C5, Dr1 ; C6, Dr2).

6. Montage suivant la revendication 5,
caractérisé en ce que
- les filtres comportent chacun une bobine (Dr1, Dr2), dont l'inductance est choisie de telle sorte que son impédance à la fréquence f d'alimentation soit plus grande que l'impédance des sources de tension produisant les tensions continues.

7. Montage suivant l'une des revendications 1 à 6,
caractérisé en ce que
- il est disposé aux bornes (A1, A2) de sortie un filtre passe-bas formé d'un condensateur (Ca) et d'une bobine (Dr3), l'inductance de la bobine (Dr3) étant choisie de telle sorte que son impédance à la fréquence f d'alimentation soit plus grande que l'impédance d'un récepteur connecté aux bornes (A1, A2) de sortie.

8. Système d'automatisation, qui est alimenté par au moins deux sources indépendantes de tension continue, comportant un montage suivant l'une des revendications 1 à 7.
